# EUROPÄISCHE PATENTSCHRIFT

(11) **EP 0 604 840 B1**
(45) Veröffentlichungstag und Bekanntmachung des Hinweises auf die Patenterteilung: **01.04.1998**
(21) Anmeldenummer: 93120257.6
(22) Anmeldetag: 16.12.1993
(51) Int. Cl.: C08G 65/32, B01J 23/26, C08G 65/20, C08G 65/10

(54) **Verfahren zur Herstellung von Polyetherglykolen**
Method for the production of polyether glycols
Procédé de préparation de polyéther glycols

(30) Priorität: 23.12.1992 DE 4243722
(43) Veröffentlichungstag der Anmeldung: 06.07.1994
(73) Patentinhaber: BASF Aktiengesellschaft, 67063 Ludwigshafen (DE)
(72) Erfinder: Weyer, Hans-Juergen, Dr., D-68167 Mannheim (DE); Fischer, Rolf, Dr., D-69121 Heidelberg (DE); Pinkos, Rolf, Dr., D-67098 Bad Duerkheim (DE)

(56) Entgegenhaltungen:
- EP-A- 0 158 835
- EP-A- 0 476 784
- US-A- 4 319 050
- US-A- 4 999 177

## Beschreibung

Die vorliegende Erfindung betrifft ein Verfahren zur Herstellung von Polyoxyalkylenglykolen oder Polyoxyalkylenglykolcopolymerisaten aus Polyoxyalkylenglykolformiaten bzw. aus den Ameisensäureestern der Polyalkylenglykolcopolymerisat.

Polyoxyalkylenglykole, die man auch als Polyetherglykole bezeichnet, insbesondere Polyoxybutylenglykol, bekannter unter dem Namen Polytetrahydrofuran, sowie die Copolymere des Tetrahydrofurans mit z. B. 1,2-Alkylenoxiden, wie Ethylenoxid, Propylenoxid oder 1,2-Butylenoxid usw. und/oder mit Diolen, wie Ethylenglykol, Propylenglykol, 1,3-Propandiol, 1,2-Butandiol, 1,6-Hexandiol usw. werden durch die kationische Ringöffnungspolymerisation cyclischer Ether mittels Brönstedt- und Lewis-Säure-Katalysatoren hergestellt (vgl. z. B. EP-A 3112, EP-A 151 766, GB-PS 854 958, EP-A 241 890, EP-A 385 632, EP-A 286 454). Dabei wird im allgemeinen eine Carbonsäureverbindung, insbesondere ein Carbonsäureanhydrid der Polymerisationsmischung zugesetzt, wobei sich die betreffenden Diester bilden. Ein Verfahren zur Herstellung von u.a. Polytetrahydrofuran-Monoformiaten führt die Polymerisation in Gegenwart eines Heteropolysäurekatalysators sowie in Gegenwart von Carbonsäuren, wie Ameisensäure, durch (vgl. EP-A 503 394).

Die so hergestellten Polyetherglykolester werden in die betreffenden Polyetherglykole herkömmlicherweise durch Verseifung (DE-A 24 45 962), Umesterung (DE-A 24 45 959) oder Hydrierung (DE-A 34 10 069) umgewandelt. Alle diese Möglichkeiten zur Freisetzung von Polyoxyalkylenglykolen aus deren Carbonsäureestern verlangen einen relativ hohen verfahrenstechnischen Aufwand, der die Herstellungskosten erhöht. Nachteilig an diesen Verfahren ist insbesondere, daß dem Polyoxyalkylenglykolester eine wäßrige oder lösungsmittelhaltige Lösung der Verseifungs- oder Umesterungsreagenzien zugesetzt werden muß, wobei das Wasser bzw. das Lösungsmittel nach der Freisetzung des Polyoxyalkylenglykols wieder von diesem abgetrennt werden muß. Zur Hydrierung der Polyoxyalkylenglykolester werden außerdem erhebliche Mengen an Wasserstoff benötigt.

Der vorliegenden Erfindung lag deshalb die Aufgabe zugrunde, ein Verfahren zur Freisetzung von Polyoxyalkylenglykolen aus ihren Estern mit Carbonsäuren zu finden, das es erlaubt, die Polyoxyalkylenglykole katalytisch in einer Stufe und ohne weiteren Trennaufwand freizusetzen. Dabei sollte die Freisetzung der Polyalkylenglykole in möglichst kurzer Zeit möglichst vollständig ablaufen, und die so erhaltenen Polyoxyalkylenglykole sollten möglichst keine ihre spätere Verwendung beeinträchtigende Verunreinigungen enthalten. Da die Polyoxyalkylenglykole als Diolkomponente bei der Herstellung von Polyurethanen eingesetzt werden, ist es z. B. essentiell, daß die so hergestellten Polyoxyalkylenglykole eine niedere Farbzahl haben, also praktisch frei von verfärbenden Verunreinigungen sind.

Dementsprechend wurde ein Verfahren zur Herstellung von Polyoxyalkylenglykolen oder Polyoxyalkylenglykolcopolymerisaten aus Polyoxyalkylenglykolformiaten bzw. aus den Ameisensäureestern von Polyoxyalkylenglykolcopolymerisaten gefunden, das dadurch gekennzeichnet ist, daß man die Ameisensäureester von Polyoxyalkylenglykolen oder von Polyoxyalkylenglykolcopolymerisaten in flüssiger Phase in Gegenwart eines heterogenen Katalysators umsetzt, der als katalytisch aktive Komponente Rhenium und/oder mindestens ein Element aus der VIII. Nebengruppe des Periodensystems der Elemente enthält.

Im erfindungsgemäßen Verfahren werden die Ameisensäureester der Polyoxyalkylenglykole oder Polyoxyalkylenglykolcopolymerisate mittels der erfindungsgemäßen Katalysatoren decarbonyliert, wobei das betreffende Polyoxyalkylenglykol praktisch quantitativ gebildet wird und als praktisch einziges weiteres Produkt gasförmiges Kohlenmonoxid entsteht, welches aus der Reaktionsmischung entweicht.

Zur Decarbonylierung der Polyoxyalkylenglykolformiate können als Katalysatoren die Metalle oder Verbindungen der Metalle der VIII. Nebengruppe des Periodensystems, also Eisen, Ruthenium, Osmium, Kobalt, Rhodium, Iridium, Nickel, Palladium und Platin sowie Rhenium oder Verbindungen des Rheniums verwendet werden. Vorzugsweise werden Nickel, Kobalt, Palladium, Ruthenium und/oder Rhenium enthaltende Katalysatoren verwendet. Die Katalysatoren werden als Heterogenkatalysatoren eingesetzt.

Die genannten katalytisch aktiven Komponenten der erfindungsgemäßen Katalysatoren können in verschiedenerlei Gestalt verwendet werden. So ist es möglich die einzelnen Metalle in elementarer Form ohne weitere Zusätze als Decarbonylierungskatalysatoren zu nutzen. Dabei werden Präparationen dieser metallischen Katalysatoren mit großer Oberfläche bevorzugt, beispielsweise Raney-Nickel, Raney-Kobalt, Platinschwamm, Palladiumschwamm oder Carbonyleisenpulver.

Ebenso können die im erfindungsgemäßen Verfahren verwendbaren Decarbonylierungskatalysatoren die katalytisch aktiven Metalle auf einem inerten Trägermaterial abgeschieden enthalten. Geeignete Trägermaterialien hierfür sind z. B. Aktivkohle, schwerlösliche Salze und Oxide der Erdalkalimetalle, beispielsweise Magnesiumoxid, Calciumoxid, Strontiumoxid, Bariumoxid, Magnesiumcarbonat, Calciumcarbonat, Strontiumcarbonat, Bariumcarbonat, Calciumsulfat, Strontiumsulfat, Bariumsulfat, die Oxide und schwerlöslichen Salze der Seltenerdmetalle, Titandioxide, Zirkoniumdioxid, Zinkoxid, Aluminiumoxide, Siliziumdioxid, Kieselgur, Siliziumcarbid, Zinndioxid, Germaniumdioxid, Bleioxid, Thoriumoxid, Wismutoxid oder Silikate, beispielsweise Steatit. Vorteilhaft können auch Gemische aus zweien oder mehreren dieser Trägermaterialien als Katalysatorträger verwendet werden. Vorzugsweise werden neutrale oder basische Trägermaterialien benutzt, insbesondere Aktivkohle, Siliziumcarbid, Siliziumdioxid, Zirkoniumdioxid, Titandioxide, Aluminiumoxide sowie Bariumsulfat und Calciumcarbonat.

Besonders vorteilhaft können im erfindungsgemäßen Verfahren solche Trägerkatalysatoren verwendet werden, deren Träger aus Aluminiumoxid, Titandioxid, Zirkoniumdioxid und/oder Siliziumdioxid bestehen und zusätzlich mit einer oder mehreren alkalisch wirkenden Verbindungen der Alkalimetalle und/oder Erdalkalimetalle dotiert sind. Im allgemeinen können diese Trägermaterialien Alkali- und/oder Erdalkalimetalle in einem Beimischungsverhältnis von 0,01 bis 70 Gew.-%, vorzugsweise von 0,1 bis 40 Gew.-%, bezogen auf das Gewicht des Trägermaterials und jeweils berechnet als Alkalimetall- bzw. Erdalkalimetalloxid, enthalten. Die Alkalimetalle, berechnet als Alkalimetalloxide können dabei im Träger vorteilhaft in einem Beimischungsverhältnis von 0,01 bis 7 Gew.-%, vorzugsweise von 0,01 bis 2 Gew.-%, bezogen auf das Gewicht des Trägermaterials enthalten sein. Bei der Dotierung des Trägers mit Erdalkalimetallen können diese, wiederum berechnet als Oxide und bezogen auf das Gewicht des Trägers, vorteilhaft in einem Beimischungsverhältnis von 0,01 bis 70 Gew.-%, vorzugsweise von 0,5 bis 40 Gew.-% enthalten sein.

Die Herstellungsweise dieser basisch dotierten Träger ist in der Regel für den Erfolg des erfindungsgemäßen Verfahrens nicht kritisch und folglich können diese Träger auf verschiedenerlei Art und Weise hergestellt werden. Beispielsweise können die Alkalimetall- und Erdalkalimetallverbindungen, beispielsweise deren Hydroxide, Carbonate, Hydrogencarbonate, Sulfate, Nitrate oder Oxide in fester Form mit dem Trägermaterial vermischt, zu Formlingen verpreßt und erforderlichenfalls, insbesondere im Falle der Verwendung von Alkalimetall- oder Erdalkalimetallsalzen, noch bei Temperaturen von 200 bis 650°C, vorzugsweise von 250 bis 600°C calciniert werden, wobei sich vermutlich die betreffenden Oxide bilden.

Die basisch dotierten Trägermaterialien können weiterhin durch Fällung, Trocknung und gegebenenfalls anschließende Calcinierung aus im allgemeinen wäßrigen Lösungen der Salze des Trägermaterials, beispielsweise mittels Alkalimetall- oder Erdalkalimetallhydroxiden oder vorzugsweise Alkalimetall- oder Erdalkalimetallcarbonaten oder -hydrogencarbonaten hergestellt werden. Insbesondere bei der Dotierung mit basisch wirkenden Erdalkalimetallverbindungen können die Erdalkalimetalle unter diesen Bedingungen gemeinsam mit dem eigentlichen Trägermaterial gefällt werden. An die Fällung schließt sich zweckmäßigerweise eine Trocknung des erhaltenen Niederschlags bei 40 bis 200°C, vorzugsweise von 60 bis 180°C und gegebenenfalls eine Calcinierung bei den obengenannten Temperaturen an.

Selbstverständlich können die basisch wirkenden Alkalimetall- oder Erdalkalimetallverbindungen auch durch Tränkung mit Lösungen ihrer Hydroxide, Carbonate, Hydrogencarbonate, Sulfate, Hydrogensulfate, Nitrate oder Carboxylate auf dem Trägermaterial abgeschieden werden, wobei anschließend zweckmäßigerweise der solchermaßen imprägnierte Träger getrocknet wird. Nach der Trocknung kann der imprägnierte Träger calciniert werden, eine Maßnahme, die sich insbesondere bei der Tränkung des Trägers mit nicht oder nur schwach basischen Salzen der Alkali- oder Erdalkalimetalle als vorteilhaft erweist. Bei dieser Calcinierung werden diese Verbindungen vermutlich zu den betreffenden Oxiden zersetzt. Die Tränkung des Trägers mit den Alkalimetall- oder Erdalkalimetallkomponenten kann vor der oder nach der oder gemeinsam mit der Tränkung des Trägers mit den katalytisch aktiven Metallkomponenten erfolgen, bevorzugt wird die Alkalimetall- und/oder Erdalkalimetalltränkung vor der Tränkung mit den katalytisch aktiven Komponenten durchgeführt.

In welcher chemischen Form die derart aufgebrachten Alkalimetall- oder Erdalkalimetallkomponenten auf dem Träger oder im Katalysator vorliegen ist nicht bekannt. Möglicherweise liegen sie als Hydroxide, Carbonate oder Oxide vor, möglicherweise bilden diese basischen Komponenten, insbesondere im Zuge der Calcinierung, mit dem Trägermaterial vollständig oder teilweise chemische Verbindungen, beispielsweise Silikate, Aluminate oder Titanate. Da die Alkalimetall- oder Erdalkalimetallkomponenten der derart dotierten Träger folglich vermutlich nicht in einheitlicher Form 5 im Träger oder später im Katalysator vorliegen, werden die jeweils aufgebrachten Alkalimetall- oder Erdalkalimetallkomponenten zur Berechnung von deren Gehaltsangaben in ihrer Summe als die betreffenden Alkalimetall- bzw. Erdalkalimetalloxide erfaßt. Da insbesondere die basische Wirkung der Alkalimetall- und/oder Erdalkalimetalldotierung für die vorteilhaften Eigenschaften der damit dotierten Träger und Katalysatoren ursächlich erscheint, ist die Art des zur Dotierung verwendeten Alkalimetall- und/oder Erdalkalimetallelements im allgemeinen unkritisch. Vorzugsweise werden die im erfindungsgemäßen Verfahren verwendeten Trägerkatalysatoren mit Lithium, Natrium, Kalium, Magnesium, Calcium und/oder Barium dotiert.

Die Aufbringung der katalytisch aktiven Metalle auf den Träger ist in der Regel nicht kritisch und kann auf verschiedenerlei Art und Weise bewerkstelligt werden. Die katalytisch aktiven Teile können auf diese Trägermaterialien z. B. durch Tränkung mit Lösungen der Salze der betreffenden Elemente und anschließende Reduktion dieser Metallsalze zu den betreffenden Metallen oder Verbindungen niederer Oxidationsstufe mittels eines Reduktionsmittels, vorzugsweise mit Hilfe von Wasserstoff oder komplexen Hydriden, aufgebracht werden. Eine andere Möglichkeit zur Aufbringung der katalytisch aktiven Metalle auf diese Träger besteht darin, die Träger mit Lösungen thermisch leicht zersetzbarer Salze, z. B. mit Nitraten oder mit thermisch leicht zersetzbaren Komplexverbindungen, z. B. mit Carbonyl- oder Hydrido-Komplexen der katalytisch aktiven Metalle zu imprägnieren und den so getränkten Träger zwecks thermischer Zersetzung der adsorbierten Metallverbindung auf Temperaturen von 300 bis 600°C zu erhitzen. Diese thermische Zersetzung wird vorzugsweise unter einer Schutzgasatmosphäre vorgenommen. Geeignete Schutzgase sind z. B. Stickstoff, Kohlendioxid, Wasserstoff oder die Edelgase. Weiterhin können die katalytisch aktiven Metalle auf dem Katalysatorträger durch Aufdampfung oder durch Flammspritzen abgeschieden werden.

Besonders bevorzugte Trägerkatalysatoren der oben beschriebenen Art sind solche die Palladium, Platin, Ruthenium oder Rhenium abgeschieden auf einem Träger aus Aktivkohle oder auf Trägern aus Aluminiumoxid, Titandioxid, Zirkoniumdioxid oder Siliziumdioxid enthalten, die vorteilhaft mit basisch wirkenden Verbindungen der Alkali- und/oder Erdalkalimetalle in der zuvor beschriebenen Weise dotiert worden sind. Der Gehalt dieser Katalysatoren an den katalytisch aktiven Metallen kann 0,1 bis 10 Gew.-%, vorzugsweise 1 bis 5 Gew.-% und berechnet als Metalle betragen. Selbstverständlich können auch mehrere der katalytisch aktiven Metalle auf dem jeweiligen Trägermaterial aufgebracht sein. Dazu können die katalytisch aktiven Metalle beispielsweise nach den Verfahren von 5 DE-A 25 19 817, EP-A 147 219 und EP-A 285 420 auf den Träger aufgebracht werden. In diesen Katalysatoren liegen die katalytisch aktiven Metalle aus der VIII. Nebengruppe des Periodensystems sowie das Rhenium zum Teil als Legierungen vor, die durch thermische Behandlung und/oder Reduktion der z. B. durch Tränkung auf einem Träger abgeschiedenen Salze oder Komplexe der zuvor genannten Metalle, erzeugt werden. Besonders bevorzugte Decarbonylierungskatalysatoren dieses Typs sind Palladium/Rhenium- und Platin-Rhenium-haltige Katalysatoren.

Des weiteren können im erfindungsgemäßen Verfahren z. B. sogenannte Fällungskatalysatoren verwendet werden. Solche Katalysatoren können hergestellt werden, indem man ihre katalytisch aktiven Komponenten aus deren Salzlösungen, insbesondere aus den Lösungen von deren Nitraten und/oder Acetaten, beispielsweise durch Zugabe von Lösungen von Alkalimetall- und/oder Erdalkalimetallhydroxid- und/oder -Carbonat-Lösungen, als z. B. schwerlösliche Hydroxide, Oxidhydrate, basische Salze oder Carbonate ausfällt, die erhaltenen Niederschläge anschließend trocknet und diese durch Calcinierung bei im allgemeinen 300 bis 700°C, insbesondere 400 bis 600°C in die betreffenden Oxide, Mischoxide und/oder gemischtvalentigen Oxide umwandelt, wonach durch eine Behandlung im Wasserstoffstrom bei in der Regel 200 bis 700°C, insbesondere bei 200 bis 400°C, das Rhenium und die Elemente der VIII. Nebengruppe vollständig oder größtenteils zu den betreffenden Metallen oder zu Verbindungen niederer Oxidationsstufe reduziert und in die eigentliche katalytisch aktive Form überführt werden. Dabei wird in der Regel solange reduziert, bis kein Wasser mehr gebildet wird. Bei der Herstellung von Fällungskatalysatoren, die ein Trägermaterial enthalten, kann die Fällung der katalytisch aktiven Komponenten in Gegenwart des betreffenden zugesetzten oder vorgefällten, festen Trägermaterials erfolgen, die katalytisch aktiven Komponenten können vorteilhaft aber auch gleichzeitig mit dem Trägermaterial aus den betreffenden Salzlösungen gefällt werden.

Als Beispiele für derart hergestellte, im erfindungsgemäßen Verfahren anwendbare Katalysatoren seien die in US-A 5 037 793, EP-A 382 049, EP-A 100 406, EP-A 18 569, EP-A 9 768 und DE-A 23 66 264 beschriebenen, Elemente der VIII. Nebengruppe und/ oder Rhenium enthaltenden Katalysatoren genannt.

Eine Vielzahl der erfindungsgemäß einsetzbaren Decarbonylierungskatalysatoren, die als katalytisch aktive Komponente Rhenium und/ oder mindestens ein Element aus der VIII. Nebengruppe des Periodensystems der Elemente enthalten, wurden bislang anderweitig, z. B. als Hydrierkatalysatoren, verwendet, wobei die katalytisch aktive Masse dieser Katalysatoren auch noch eine für den jeweiligen Verwendungszweck fördernde Menge anderer Elemente enthalten kann. Insoweit die in der katalytisch aktiven Masse enthaltenen zusätzlichen Elemente die Decarbonylierung der Polyoxyalkylenglykolformiate fördernd beeinflussen, steht deren Wirkung im allgemeinen hinter der der erfindungsgemäß anzuwendenden, katalytisch aktiven Komponenten zurück, weshalb im erfindungsgemäßen Verfahren solche Katalysatoren bevorzugt eingesetzt werden, deren katalytisch aktive Masse, unabhängig von der Art ihrer Herstellung, zu mindestens 50 Gew.-% aus Rhenium und/oder einem oder mehreren Elementen der VIII. Nebengruppe des Periodensystems besteht. Das Rhenium und die Elemente der VIII. Nebengruppe des Periodensystems können dabei im Katalysator grundsätzlich in allen Oxidationsstufen vorliegen, niedere Oxidationsstufen werden allerdings bevorzugt. Besonders bevorzugt werden Katalysatoren eingesetzt, die diese katalytisch aktiven Elemente in metallischer Form enthalten.

Mit Hilfe des erfindungsgemäßen Verfahrens können Polyoxialkylenglykolformiate jedweder Art, also sowohl Monoformiate als auch Diformiate sowie Polyoxyalkylenglykolformiate mit mehr als zwei Formiatgruppen pro Molekül, zu den betreffenden Polyoxyalkylenglykolen decarbonyliert werden. Dabei können selbstverständlich sowohl homopolymere Polyoxyalkylenglykolformiate, beispielsweise die Formiate von Polyethylenglykol, Polypropylenglykol und Polytetrahydrofuran, als auch copolymere Polyoxyalkylenglykolformiate als Ausgangsverbindungen eingesetzt werden, wobei die Art des Comonomers in diesen Polyoxyalkylenglykolformiaten im Hinblick auf den Erfolg des erfindungsgemäßen Decarbonylierungsverfahrens im allgemeinen keiner Beschränkung unterliegt. Neben den Hauptmonomeren, als deren wirtschaftlich wichtigste lediglich Ethylenoxid, Propylenoxid, Tetrahydrofuran und Methyltetrahydrofuran genannt seien, können je nachdem welches Monomer das Hauptmonomer ist, ) die zuvor genannten Monomere als Comonomere enthalten sein. Andere Comonomere die in den erfindungsgemäß als Ausgangsmaterial dienenden Polyoxyalkylenglykolformiaten eingebaut sein können sind z. B. Ethylenglykol, Propylenglykol, Oxetan, 1,3-Propandiol, Glycerin, Glycidol, 1,4-Butandiol, 1,2-Butylenglykol, 1,3-Butandiol, 2,3-Butylenglykol, Pentandiole, Pentaerythrit, 1,6-Hexandiol, Zuckeralkohole, wie Sorbit, Mannit oder Xylit, Neopentylglykol, Neopentylglykolhydroxypivalinsäureester, Dioxan, γ-Butyrolacton oder ε-Caprolacton, sowie andere Polyoxyalkylenglykole, die z. B. als Blöcke in das betreffende Ausgangsmaterial einpolymerisiert sein können.

Zur Durchführung des erfindungsgemäßen Verfahrens wird das betreffende Polyoxyalkylenglykolformiat, gegebenenfalls in gelöster Form, mit den erfindungsgemäß anzuwendenden Decarbonylierungskatalysatoren in Kontakt gebracht. Dabei können eine Vielzahl von Lösungsmitteln benutzt werden, beispielsweise aliphatische und aromatische Kohlenwasserstoffe, Alkohole, insbesondere C₁- bis C₂₀-Alkohole, Ether, wie Diethylether, Diisopropylether, Dipropylether, Methyl-tert.-Butylether, Ethyl-tert.-Butylether, Anisol, Phenetol, Tetrahydrofuran oder Dioxan sowie die Ester von C₂- bis C₂₀-Carbonsäuren. Der Zusatz eines Lösungsmittels kann sich z. B. insofern vorteilhaft auf die erfindungsgemäße Umsetzung auswirken, als die Viskosität der Reaktionsmischung erniedrigt wird. Besonders bevorzugt wird jedoch in Abwesenheit eines solchen Lösungsmittel gearbeitet, da man sich auf diese Weise die Abtrennung des Lösungsmittels bei der Aufarbeitung des Reaktionsgemisches erspart.

Der Katalysator kann zur Decarbonylierung der Polyoxyalkylenglykolformiate als Suspensionskatalysator eingesetzt werden, vorzugsweise und dies insbesondere bei der kontinuierlichen Betreibung des erfindungsgemäßen Verfahrens im Rohrreaktor oder in Reaktorkaskaden wird er in einem Festbett angeordnet, über das das Reaktionsgemisch in der Sumpf- oder Rieselfahrweise geleitet werden kann. Dabei wird der Zulauf an Reaktionsmischung zweckmäßigerweise so gesteuert, daß das Gewichtsverhältnis der katalytisch aktiven Masse des Katalysators 0,01 bis 100 Gew.-Teile, vorzugsweise 0,1 bis 50 Gew.-Teile pro 100 Gew.-Teilen Polyetherglykolformiat je Stunde beträgt. Selbstverständlich kann die Katalysatormenge bezüglich des Polyoxyalkylenglykolformiats weiter erhöht werden.

Die Polyoxyalkylenglykolformiate werden im allgemeinen bei Temperaturen von 0 bis 350°C, vorzugsweise von 50 bis 300°C und insbesondere von 80 bis 250°C decarbonyliert. Dabei wird vorteilhaft unter Atmosphärendruck gearbeitet. Das Arbeiten unter erhöhtem oder vermindertem Druck, insbesondere unter dem Eigendruck des Reaktionssystems ist ebenfalls möglich.

Die Dauer der Umsetzung, mithin die Verweilzeit der Polyoxyalkylenglykolformiate im Reaktor richtet sich nach dem verwendeten Einsatzstoff, der angewandten Reaktionstemperatur und der verwendeten Katalysatormenge und wird zweckmäßigerweise für jeden Einzelfall optimiert. Dabei kann der Verlauf der Decarbonylierung beispielsweise mittels Infrarot(IR)spektroskopie durch die Messung der Abnahme der Carbonylbande im IR-Spektrum, oder durch die Messung der Menge des freigesetzten Kohlenmonoxids verfolgt werden.

Üblicherweise wird das erfindungsgemäße Verfahren aus Sicherheitsgründen unter einer Schutzgasatmosphäre ausgeübt, wobei reduzierende Gase, wie Wasserstoff, oder Inertgase, wie Stickstoff oder Argon, zugeführt werden können.

Nach dem erfindungsgemäßen Verfahren können Polyoxyalkylenglykole aus dem betreffenden Polyoxyalkylenglykolformiaten wirtschaftlich, in guter Ausbeute und insbesondere in hoher Reinheit und mit einer niederen Farbzahl erhalten werden, die ihre Verwendung als Diolkomponente zur Herstellung von Polyurethanen ermöglicht.

### Beispiele

Für die folgenden Beispiele wurde Polytetrahydrofuranmonoformiat eines mittleren Molekulargewicht von 950 Dalton eingesetzt, das durch die Polymerisation von Tetrahydrofuran in Gegenwart von Ameisensäure und in Gegenwart des Katalysators H₃PW₁₂O₄₀ nach dem Verfahren von EP-A 503 394 hergestellt worden war.

Die verwendeten Katalysatoren A bis F besaßen die folgende Zusammensetzungen (%-Angaben in Gew.-%) :

| | |
|---|---|
| A) | 100 % Ni (Raney-Nickel) |
| B) | 50,7 % Nickel, ber. als NiO; 16,9 % Kupfer, ber. als CuO; 30,8 % Zirkonium, ber. als ZrO₂; 1,6 % Molybdän, ber. als MoO₃. |
| C) | 63,4 % Kobalt, ber. als CoO; 18,1 % Kupfer, ber. als CuO; 6,8 % Mangan, ber. als Mn₃O₄; 3,1 % Molybdän, ber. als MoO₃; 3,3 % Phosphor, ber. als P₂O₅; 0,15 % Natrium, ber. als Na₂O; 5,1 % H₂O. |
| D) | 10 % Pd auf 90 % Aktivkohle |
| E) | 5 % Ru auf 95 % Aktivkohle |
| F) | 3 % Re auf 97 % Aktivkohle |
| G) | 0,5 % Pd auf einem Träger aus 80 % Al₂O₃ und 20 % CaO. |

Die Katalysatoren A, D, E und F wurden als Pulver eingesetzt. Katalysator B, hergestellt nach dem Verfahren von US-A 5 037 793, Katalysator C, hergestellt nach dem Verfahren von EP-A 100 406 und Katalysator G, hergestellt durch Tränken des durch Verkneten von feuchtem Al₂O₃ und CaO und anschließender Calcinierung bei 550°C erhaltenen Al₂O₃/CaO-Trägers mit einer wäßrigen Palladiumnitratlösung, wurden in Form von 4 mm-Strängen verwendet, die vor ihrem Einsatz im erfindungsgemäßen Verfahren im Wasserstoffstrom bei 240°C (Katalysatoren A bis F) bzw. bei 190°C (Katalysator G) solange reduziert wurden, bis kein Wasser mehr gebildet wurde. Bei den Katalysatoren A, D, E und F handelte es sich um handelsübliche Katalysatoren.

Zur Decarbonylierung wurden 50 g des Polytetrahydrofuranmonoformiats unter einer Stickstoffatmosphäre bei einem Druck von 1 bar unter den in der Tabelle genannten Bedingungen in einem Glaskolben erhitzt. Nach Beendigung der Reaktion wurde das Polymer durch Filtration vom verwendeten Katalysator abgetrennt. Der Reaktionsverlauf wurde IR-spektroskopisch verfolgt. Als Reaktionszeit wird in der Tabelle die Zeitdauer bezeichnet, die benötigt wurde, bis die IR-Absorption der Carbonyl-Schwingung bei 1724 cm⁻¹ auf 5 % des Ursprungswertes abgesunken war.

**Tabelle**

| Beispiel | Katalysator | Katalysatormenge [g] | Reaktionstemperatur [°C] | Reaktionszeit [h] |
|---|---|---|---|---|
| 1 | A | 7 | 250 | 3 |
| 2 | B | 10 | 200 | 6 |
| 3 | C | 10 | 250 | 5 |
| 4 | D | 5 | 200 | 11 |
| 5 | E | 9 | 250 | 8 |
| 6 | F | 16 | 250 | 15 |
| 7 | G | 25 | 130-150 | 15 |

## Patentansprüche

1. Verfahren zur Herstellung von Polyoxyalkylenglykolen oder Polyoxyalkylenglykolcopolymerisaten aus Polyoxyalkylenglykolformiaten bzw. aus den Ameisensäureestern von Polyoxyalkylenglykolcopolymerisaten, dadurch gekennzeichnet, daß man die Ameisensäureester von Polyoxyalkylenglykolen oder von Polyoxyalkylenglykolcopolymerisaten in flüssiger Phase in Gegenwart eines heterogenen Katalysators umsetzt, der als katalytisch aktive Komponente Rhenium und/oder mindestens ein Element aus der VIII. Nebengruppe des Periodensystems der Elemente enthält.

2. Verfahren nach Anspruch 1, dadurch gekennzeichnet, daß man Katalysatoren verwendet, die als katalytisch aktive Komponente mindestens eines der Elemente Nickel, Palladium, Kobalt, Ruthenium und Rhenium enthalten.

3. Verfahren nach Anspruch 1, dadurch gekennzeichnet, daß man Katalysatoren verwendet, deren katalytisch aktive Komponente auf einem Trägermaterial aufgebracht ist.

4. Verfahren nach Anspruch 1, dadurch gekennzeichnet, daß man Katalysatoren verwendet, deren katalytisch aktive Komponente auf einem Trägermaterial aufgebracht ist und die außerdem noch eine basisch wirkende Alkalimetall- und/oder Erdalkalimetallverbindung enthalten.

5. Verfahren nach Anspruch 1, dadurch gekennzeichnet, daß man Katalysatoren verwendet, deren katalytisch aktive Komponente auf einem Trägermaterial aufgebracht ist und die außerdem noch 0,01 bis 70 Gew.-%, bezogen auf das eingesetzte Trägermaterial einer basisch wirkenden Alkalimetall- und/oder Erdalkalimetallverbindung, berechnet als Alkalimetall- oder Erdalkalimetalloxid, enthält.

6. Verfahren nach Anspruch 1, dadurch gekennzeichnet, daß man Katalysatoren verwendet, deren katalytisch aktive Masse zu mindestens 50 Gew.-% aus Rhenium und/oder mindestens einem Element der VIII. Nebengruppe des Periodensystems der Elemente besteht.

7. Verfahren nach Anspruch 1, dadurch gekennzeichnet, daß man die Umsetzung bei 0 bis 350°C durchführt.

8. Verfahren nach Anspruch 1, dadurch gekennzeichnet, daß man einen Katalysator verwendet, der die katalytisch aktive Komponente als Metall oder als Legierung enthält.

## Claims

1. A process for the preparation of polyoxyalkylene glycols or polyoxyalkylene glycol copolymers from polyoxyalkylene glycol formates or the formates of polyoxyalkylene glycol copolymers, which comprises reacting the formates of polyoxyalkylene glycols or of polyoxyalkylene glycol copolymers in the liquid phase in the presence of a heterogeneous catalyst which contains, as catalytically active component, rhenium and/or at least one element from sub-group VIII of the Periodic Table of the Elements.

2. A process as claimed in claim 1, wherein catalysts are used which contain, as catalytically active component, at least one of the elements nickel, palladium, cobalt, ruthenium and rhenium.

3. A process as claimed in claim 1, wherein catalysts are used whose catalytically active component has been applied to a support material.

4. A process as claimed in claim 1, wherein catalysts are used whose catalytically active component has been applied to a support material and which also contain a basic alkali metal compound and/or alkaline earth metal compound.

5. A process as claimed in claim 1, wherein catalysts are used whose catalytically active component has been applied to a support material and which also contain from 0.01 to 70 % by weight, based on the support material employed, of a basic alkali metal compound and/or alkaline earth metal compound, calculated as alkali metal oxide or alkaline earth metal oxide.

6. A process as claimed in claim 1, wherein catalysts are used whose catalytically active material comprises at least 50 % by weight of rhenium and/or at least one element from sub-group VIII of the Periodic Table of the Elements.

7. A process as claimed in claim 1, wherein the reaction is carried out at from 0 to 350°C.

8. A process as claimed in claim 1, wherein a catalyst is used which contains the catalytically active component as a metal or as an alloy.

## Revendications

1. Procédé de préparation de polyoxyalkylèneglycols ou de copolymères de polyoxyalkylèneglycols à partir de formiates de polyoxyalkylèneglycols ou à partir de formiates de copolymères de polyoxyalkylèneglycols, caractérisé en ce que l'on fait réagir les formiates de polyoxyalkylèneglycols ou de copolymères de polyoxyalkylèneglycols en phase liquide et en présence d'un catalyseur hétérogène contenant, en tant que composant à action catalylique, du rhénium et/ou au moins un élément du groupe VIII de la classification périodique des éléments.

2. Procédé selon la revendication 1, caractérisé en ce que l'on utilise des catalyseurs contenant, en tant que composant à action catalytique, au moins l'un des éléments du groupe formé par le nickel, le palladium, le cobalt, le ruthénium et le rhénium.

3. Procédé selon la revendication 1, caractérisé en ce que l'on utilise des catalyseurs dont le composant à action catalytique est déposé sur un support.

4. Procédé selon la revendication 1, caractérisé en ce que l'on utilise des catalyseurs dont le composant à action catalytique est déposé sur un support et qui contiennent en outre un composé basique de métal alcalin et/ou de métal alcalino-terreux.

5. Procédé selon la revendication 1, caractérisé en ce que l'on utilise des catalyseurs dont le composant à action catalytique est déposé sur un support et qui contiennent en outre 0,01-70% en poids, par rapport au support utilisé, d'un composé basique de métal alcalin et/ou de métal alcalino-terreux, compté en tant qu'oxyde de métal alcalin ou qu'oxyde de métal alcalino-terreux.

6. Procédé selon la revendication 1, caractérisé en ce que l'on utilise des catalyseurs dont la masse catalytique active est constituée pour au moins 50% en poids de rhénium et/ou d'au moins un élément du groupe VIII de la classification périodique des éléments.

7. Procédé selon la revendication 1, caractérisé en ce que l'on effectue la réaction à 0-350°C.

8. Procédé selon la revendication 1, caractérisé en ce que l'on utilise un catalyseur contenant le composant à action catalylique sous forme de métal ou d'alliage.
